# EUROPEAN PATENT SPECIFICATION

(11) **EP 4 322 285 B1**
(45) Date of publication and mention of the grant of the patent: **15.04.2026**
(21) Application number: 22833715.0
(22) Date of filing: 01.07.2022
(51) Int. Cl.: H01M 10/6556, H01M 10/6567, H01M 10/647, H01M 10/613, H01M 50/211, B21D 39/03, B21D 37/01

(54) **COOLING MEMBER AND MANUFACTURING METHOD THEREOF, AND BATTERY PACK INCLUDING THE SAME**
KÜHLELEMENT UND HERSTELLUNGSVERFAHREN DAFÜR SOWIE BATTERIEPACK DAMIT
ÉLÉMENT DE REFROIDISSEMENT ET SON PROCÉDÉ DE FABRICATION, ET BLOC-BATTERIE LE COMPRENANT

(30) Priority: 02.07.2021 KR 20210086816
(43) Date of publication of application: 14.02.2024
(73) Proprietor: LG Energy Solution, Ltd., Seoul 07335 (KR)
(72) Inventor: YU, Sanghyun, Daejeon 34122 (KR); CHO, Young Bum, Daejeon 34122 (KR); YOON, Han Ki, Daejeon 34122 (KR); JEONG, Ji Won, Daejeon 34122 (KR); NAMGOUNG, Hyeok, Daejeon 34122 (KR); KU, Wonhoe, Daejeon 34122 (KR)
(74) Representative: Plasseraud IP
(86) International application number: PCT/KR2022/009554
(87) International publication number: WO 2023/277662

(56) References cited:
- CA-A1- 2 586 776
- DE-A1- 102009 036 185
- DE-U1- 202018 107 289
- KR-A- 20140 026 961
- KR-A- 20140 089 067
- KR-A- 20140 138 412
- KR-A- 20150 087 515
- KR-A- 20200 107 120
- US-A1- 2015 086 831
- US-A1- 2020 161 722
- US-B2- 9 711 829

## Description

### [TECHNICAL FIELD]

The present disclosure relates to a cooling member and a manufacturing method thereof, and a battery pack including the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, there is a growing need for development of the secondary battery.

Currently commercialized secondary batteries include a nickel cadmium battery, a nickel hydrogen battery, a nickel zinc battery, and a lithium secondary battery. Among them, the lithium secondary battery has come into the spotlight because they have advantages, for example, being freely charged and discharged, and having very low self-discharge rate and high energy density.

Meanwhile, in the case of a secondary battery used for small-sized devices, two to three battery cells are used, but in the case of a secondary battery used for a middle- or large-sized device such as an automobile, a middle- or large-sized battery module in which a large number of battery cells are electrically connected is used. Since the middle or large-sized battery module is preferably manufactured so as to have as small a size and weight as possible, a prismatic battery, a pouch-shaped battery or the like, which can be stacked with high integration and has a small weight relative to capacity, is mainly used as a battery cell of the middle or large-sized battery module.

Meanwhile, the battery cell mounted onto the battery module may generate a large amount of heat in the charge and discharge process. If the temperature becomes higher than an appropriate temperature due to overcharging or the like, the performance may deteriorate. If the temperature rise is excessive, there is a risk of explosion or ignition. If an ignition phenomenon occurs inside the battery module, high-temperature heat, gas, or flame may be emitted to the outside of the battery module, wherein the heat, gas, spark or flame emitted from one battery module may be transmitted to other adjacent battery modules at a narrow interval within the battery pack, which can lead to a cascading thermal runaway phenomenon within the battery pack.

In order to prevent such a thermal runaway phenomenon, the conventional battery module is provided with a cooling member, a heat dissipation member or the like. In recent years, attempts have been made to apply a water-cooled type cooling member or a water-cooled type heat dissipating member into which cooling water is injected.

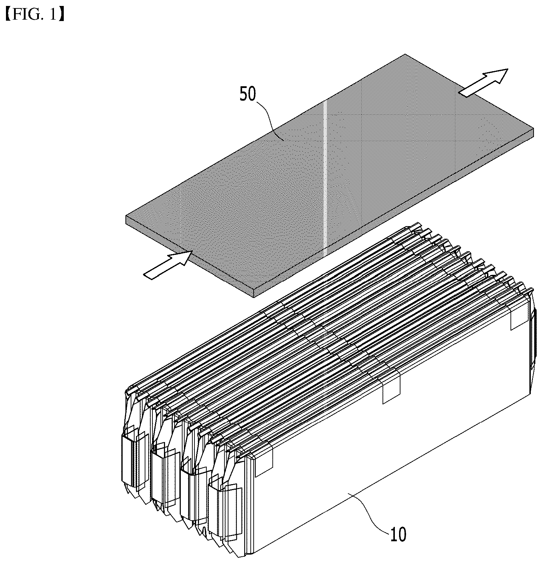

Fig. 1 is a diagram which shows a water-cooled type cooling member provided in a battery cell stack.

Referring to Fig. 1, the water-cooled type cooling member 50 may be located on the upper part of the battery cell stack 10 as shown. In the case of the air-cooled type cooling element where cooling water is not provided, there is a problem that the battery cell stack 10 could not be uniformly cooled because a temperature gradient is formed in the cooling member depending on the position of a fan. However, the water-cooled type cooling member 50 has an advantage that the temperature deviation of the cooling member 50 is minimized because the temperature of the cooling member 50 can be maintained relatively constantly by a cooling water injected along the arrow direction.

The water-cooled type cooling member 50 is formed by joining an upper plate and a lower plate, and the cooling water is accommodated in a space between the upper plate and the lower plate. Conventionally, in order to secure watertightness, the upper plate and the lower plate are mainly coupled using a method such as welding. However, when the physical properties of the upper plate and the lower plate are different from each other, or at least one of the upper plate and the lower plate partially includes a material having different physical properties, there has been a problem that materials usable for the water-cooled type cooling member 50 are limited because the upper plate and the lower plate are not well joined by welding, or the upper plate and the lower plate may be damaged during the joining process,

Documents DE 102009036185 A1 and DE 202018107289 A1 are about cooling members for batteries, whereby DE 202018107289 A1 discloses the features of the preamble of claim 1.

Therefore, there is a need for a technique capable of solving the above problems of the conventional techniques.

### [DETAILED DESCRIPTION OF THE INVENTION]

### [Technical Problem]

It is an object of the present disclosure to provide a cooling member capable of applying a cooling method using cooling water, and a manufacturing method thereof, and a battery pack including the same.

### [Technical Solution]

To this end, the invention relates to a cooling member for a battery cell according to claim 1.

The cooling member after the invention may present one or more of the features of the dependent claims 2 to 6, in any combination allowed by the claims.

The invention also relates to a method according to claim 7. The method after the invention may present one or more features from dependent claims 8 to 10.

The invention also relates to a battery module according to claim 11 and to a battery pack according to claim 12.
The battery pack after the invention may present the features of claim 13.

The battery pack may include a battery module having a module-less structure.

### [Advantageous Effects]

According to embodiments of the present disclosure, a mechanical fastening method can be applied instead of a conventional welding joining method, thereby manufacturing a cooling member to which various materials are applied.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a diagram which shows a water-cooled type cooling member provided in a battery cell stack;
Fig. 2 is a perspective view which shows a cooling member according to an embodiment of the present disclosure;
Fig. 3 is a diagram which shows an upper plate included in the cooling member of Fig. 2;
Fig. 4 is a diagram which shows a lower plate included in the cooling member of Fig. 2;
Fig. 5 is a diagram which shows a cross-sectional view taken along the line A-A of the cooling member of Fig. 2;
Fig. 6 is a diagram which shows a process in which the cross-sectional structure of Fig. 5 is formed;
Fig. 7 is a partially enlarged view of the cooling member of Fig. 2;
Fig. 8 is a diagram which shows a cross-sectional view taken along the line B-B of the cooling member of Fig. 2;
Fig. 9 is a diagram which shows a process in which the cross-sectional structure of Fig. 8 is formed;
Fig. 10 is a flowchart which shows a method of manufacturing a cooling member according to another embodiment of the present disclosure;
Fig. 11 is an exploded perspective view which shows a battery pack according to another embodiment of the present disclosure; and
Fig. 12 is a perspective view of a battery module included in the battery pack according to Fig. 11.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means arranged on or below a reference portion, and does not necessarily mean being arranged on the upper end of the reference portion toward the opposite direction of gravity. Meanwhile, similar to the case where it is described as being located "on" or "above" another part, the case where it is described as being located "below" or "under" another part will also be understood with reference to the above-mentioned contents.

Further, since the upper surface/lower surface of a specific member can be determined differently depending on which direction is used as a reference direction, the 'upper surface' or 'lower surface' as used herein is defined as meaning two surfaces facing each other on the z-axis of the member.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

Below, a cooling member according to an embodiment of the present disclosure will be described.

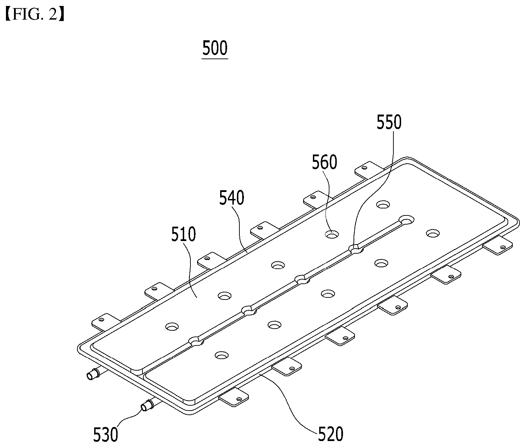

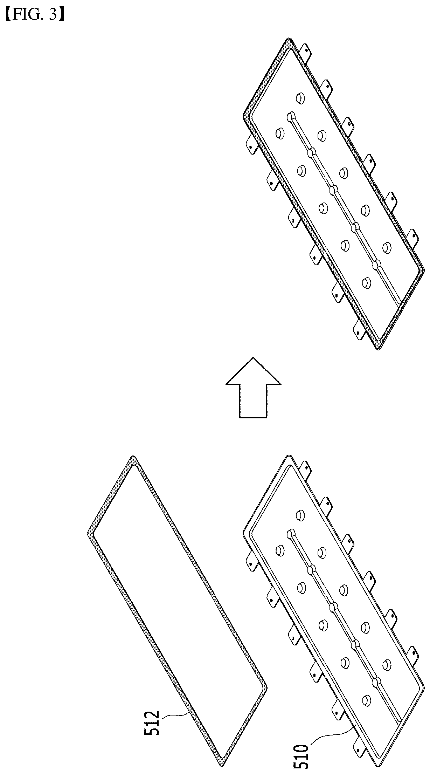

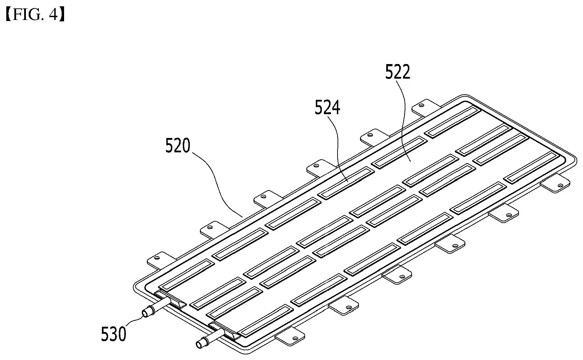

Fig. 2 is a perspective view which shows a cooling member according to an embodiment of the present disclosure. Fig. 3 is a diagram which shows an upper plate included in the cooling member of Fig. 2. Fig. 4 is a diagram which shows a lower plate included in the cooling member of Fig. 2.

Referring to Fig. 2, the cooling member 500 of the present embodiment can be provided to lower the internal temperature of a battery module or battery pack including a battery cell. The cooling member 500 may be a water-cooled type cooling member 500 into which a refrigerant or cooling water is injected. By providing the cooling member 500 in a water-cooled manner, the cooling efficiency of the cooling member 500 can be uniformly maintained, and the battery cells within the battery module or battery pack may be uniformly cooled. At this time, the cooling water used in the cooling member 500 can use one of known ones or a mixture thereof, and if the heat of the battery cells can be dissipated by moving along the flow path inside the cooling member 500, and any of known ones can be used.

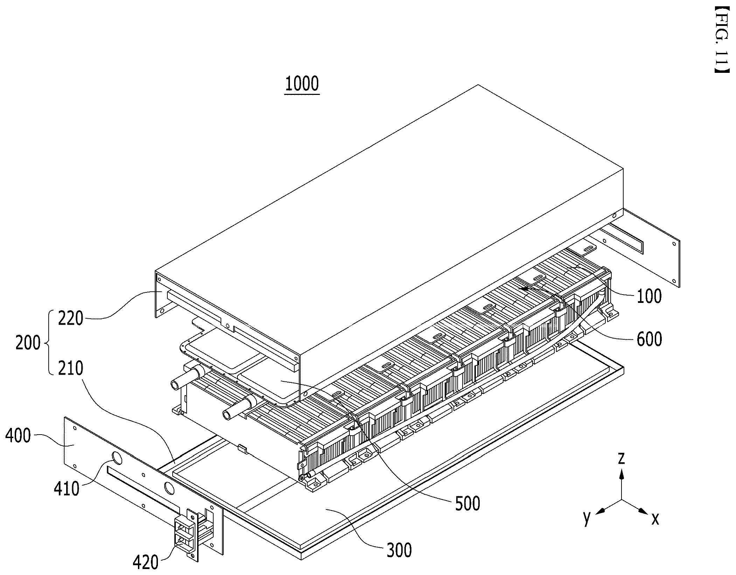

The cooling member 500 may be arranged on one surface of the battery cell stack to dissipate the heat of the battery cells. The cooling member 500 can be arranged in parallel with the stacking direction of the battery cell stack so as to be located close to the plurality of battery cells of the battery cell stack. Specifically, the cooling member 500 may be located on the upper part of the battery cell stack (in the +z-axis direction of Fig. 11). However, it is not necessarily the case, and depending on the design, the cooling member 500 may be located at the lower part (-z-axis direction) of the battery cell stack, or may be located at the side part (+/-y-axis direction) of the battery cell stack.

The size of the cooling member 500 may be matched with the size of the battery cell stack to which the cooling member 500 is applied. **In** one example, the cooling member 500 may be provided so as to correspond to one battery cell stack, wherein the length of the cooling member 500 may be matched with the length of the battery cell stack, or may be formed larger or smaller with a slight margin, and the width of the cooling member 500 may be matched with the width of the battery cell stack, or may be formed larger or smaller with a slight margin. **In** another example, the cooling member 500 may be provided so as to correspond to a plurality of battery cell stacks, wherein the length and width of the cooling member 500 may match with the length and width of the plurality of battery cell stacks, or may be formed larger or smaller with a slight margin. Here, the cooling member 500 may be located inside the battery module, but it can also be located at the outside of the battery module and the inside of the battery pack 1000 (see Fig. 11).

The cooling member 500 may include an upper plate 510 and a lower plate 520 that form the outer shape of the cooling member 500, and an inlet/outlet port 530 that injects cooling water into the inside of the cooling member 500.

The cooling member 500 may be formed by coupling the edges of the upper plate 510 and the lower plate 520. A sealing part 540, that is formed by coupling the edges of the upper plate 510 and the lower plate 520 of the cooling member 500, may be located at an edge part of the cooling member 500. The cooling water can be contained or circulated between the upper plate 510 and the lower plate 520 coupled in the cooling member 500.

The cooling water may be supplied through an inlet port 530 disposed side by side and discharged to the outlet port 530. The inlet port 530 and the outlet port 530 may be disposed side by side in parallel on one end side of the cooling member 500. This may be for simplifying the design regarding the inflow and discharge of the cooling water supplied from the outside of the battery module or battery pack. Further, this can be for minimizing the temperature difference between the periphery of the inlet port 530 and the periphery of the outlet port 530. Specifically, the cooling water flowing into the inlet port 530 may have the lowest temperature, and the cooling water discharging to the outlet port 530 may have the highest temperature. Therefore, when the inlet/outlet ports 530 are arranged adjacent to each other, mutual heat exchange occurs, so that a temperature deviation of the entire cooling water flowing through the inner space of the cooling member can be minimized. Therefore, by arranging the inlet/outlet ports 530 side by side, the cooling member 500 can have uniform heat dissipation performance as a whole.

A flow path forming groove 550 may be formed in the cooling member 500. As the flow path forming groove 550 is provided in the cooling member 500, the flow of the cooling water provided to the cooling member 500 can be determined. The flow path forming groove 550 can be formed in plural numbers, and the plurality of flow path forming grooves 550 may be disposed along a straight line parallel to the longitudinal direction of the cooling member 500. The flow path forming groove 550 may be formed consecutively along the longitudinal direction of the cooling member 500 at the center of the cooling member 500 except for a predetermined section, whereby the flow of the cooling water can be formed in a U-shape. The flow of the cooling water injected through the inlet port 530 of the cooling member 500 can be restricted by the flow path forming groove 550. As the cooling water flows along the U-shape, the cooling water injected through the inlet port 530 may be discharged to the outlet port 530 located side by side with the inlet port 530. Specifically, the U-shaped flow path through which the cooling water flows may include a first flow path extending from the inlet port 530 along a straight line parallel to the longitudinal direction of the cooling member 500, a second flow path extending along a curve rotating in a clockwise or counterclockwise direction at the terminal end of the first flow path, and a third flow path extending along a straight line parallel to the longitudinal direction of the cooling member 500 toward the outlet port 530 at the terminal end of the second flow path.

A deformation prevention groove 560 may be formed in the cooling member 500. As the deformation prevention groove 560 is provided in the cooling member 500, the shape deformation of the cooling member 500 by the cooling water can be prevented. For example, when cooling water is injected into the cooling member 500, the injected cooling water may be concentrated in the 1/2 space of the cooling member 500 by the flow path forming groove 550 that crosses the center. Until the cooling water moves through the U-shaped flow path into the remaining 1/2 space through the U-shaped flow path, a large pressure can be applied to the space, whereby at least a part of the cooling member 500 may expand or the cooling member 500 may be damaged. When the deformation prevention groove 560 is formed in the flow path of the cooling member 500, the cooling water is temporarily concentrated and thus, even if a large pressure acts on a specific section, deformation due to this can be minimized. The deformation prevention grooves 560 may be partially disposed at intervals in the U-shaped flow path through which the cooling water flows in the cooling member 500. The deformation prevention groove 560 may be disposed between the flow path forming groove 550 and the sealing part 540 in the width direction of the cooling member 500. The specific position of the deformation prevention groove 560 may be appropriately set so as to correspond to the flow rate and flow velocity of the cooling water without excessively obstructing the cooling water flowing in through the inlet port 530. Here, the width direction of the cooling member 500 may be a direction parallel to a short side of the cooling member 500. Further, here, the longitudinal direction of the cooling member 500 may be a direction parallel to a long side of the cooling member 500.

In addition, a protrusion part extending from one side of the cooling member 500 and disposed consecutively along the longitudinal direction of the cooling member 500 can be formed in the periphery of the cooling member 500. As shown in Fig. 11 described later, the protrusion part may be disposed in contact with, or adjacent to, an electrode lead of each battery cell stack or a busbar connected to the electrode lead. The electrode lead or busbar that provides electrical connection in the battery module or battery pack is a configuration that is prone to heat generation. Therefore, when the above-mentioned protrusion part promotes heat dissipation of the electrode lead or the busbar, the temperature rise of the battery cell can be more effectively prevented.

Referring to Fig. 3, the upper plate 510 is provided in a plate shape, but may be formed so that its central part is recessed or indented to have a step difference from the edge part. Specifically, the upper plate 510 may have a recessed shape with respect to a cross section in the width direction. This can be for forming an inner space through a step difference so that the upper plate 510 accommodates the cooling water. Here, the width direction of the upper plate 510 may be a direction parallel to the short side of the upper plate 510.

The cooling member 500 may be provided with a sealing pad 512. Fig. 3 shows the rear surface of the upper plate 510, that is, the surface facing the lower plate 520 from the upper plate 510, wherein the sealing pad 512 may be provided on the rear surface of the upper plate 510, and located between the upper plate 510 and the lower plate 520. The sealing pad 512 may be located at the sealing part 540 in the cooling member 500.

The sealing pad 512 may be made from a flexible material having elastic force. An example of the material made into the sealing pad 512 may include a silicone-based foam pad, an acrylic-based foam pad, a urethane-based foam pad, and the like. The sealing pad 512 is compressed by an external force when the upper plate 510 and the lower plate 520 are coupled, so that a gap existing between the upper plate 510 and the lower plate 520 can be filled. The sealing pad 512 can prevent the cooling water inside the cooling member 500 from flowing out to the outside through the gap.

Meanwhile, Fig. 3 shows that the above-mentioned flow path forming groove 550 and the deformation prevention groove 560 are formed in the upper plate 510. However, since the flow path forming groove 550 or the deformation prevention groove 560 can be formed through an additional process after the upper plate 510 and the lower plate 520 are coupled, It is not necessarily required that the flow path forming groove 550 or the deformation prevention groove 560 be previously formed on the upper plate 510 that is provided during manufacture of the cooling member 500.

Referring to Fig. 4, the lower plate 520 of the cooling member 500 may have a shape similar to the upper plate 510 as a whole. The lower plate 520 is also provided in a plate shape, but may be formed so that the central part thereof is recessed or indented to have a step difference from the edge part. The lower plate 520 may have a recessed shape on the basis of a cross section in the width direction, thereby forming an inner space for accommodating the cooling water. Here, the width direction of the lower plate 520 may be a direction parallel to the short side of the lower plate 520.

When the cooling member 500 is provided on the upper part of the battery cell, the lower plate 520 may be a portion located closest to the battery cell in the cooling member 500. Therefore, the lower plate 520 may be preferably made from a material having high thermal conductivity so as to promote heat dissipation of the battery cell. Further, in order to improve the overall heat dissipation performance of the cooling member 500, the upper plate 510 of the cooling member 500 may also be made from a material having high thermal conductivity. The upper plate 510 and the lower plate 520 for forming the outer shape of the cooling member 500 may be made of a metal with high stiffness, and specific examples thereof include aluminum, gold, silver, copper, platinum, an alloy containing these, or the like.

The lower plate 520 may be made from one material, or may be made from two or more materials. For example, the lower plate 520 may include a first part 522 formed from a first material and a second part 524 formed from a second material. Specifically, the lower plate 520 can be formed by removing a partial region from the plate-shaped member made of the first material and then filling and then inserting a member made of the second material into the removed partial region. Thereby, when an ignition occur inside the battery cell, the second part 524 of the lower plate 520 can be opened by heat or pressure generated due to the ignition. The second material provided for the second part 524 may be more vulnerable to heat or pressure than the first material. When the second part 524 is opened, the cooling water in the cooling member 500 may be injected to the battery cells, so that the ignition phenomenon of the battery cells may be more rapidly mitigated. More specifically, the first material may be a metal such as aluminum, and the second material may be a thermoplastic polymer resin having a melting point of 200°C or less. Examples of the thermoplastic polymer resin may include a material having a melting point of about 100°C or more and 200°C or less, such as polyethylene and polypropylene.

On the other hand, as described above, even if the upper plate 510 or the lower plate 520 is made of two or more materials, or the lower plate 520 is made of one material, the upper plate 510 is made of a material different from that of the lower plate 520, so that two or more materials having different physical properties can be included in the cooling member 500. Conventionally, the upper plate 510 and the lower plate 520 of the cooling member 500 are mainly coupled by brazing or laser welding, etc. and thus, when the cooling member 500 is designed so as to include two or more materials in this way, one material can be deformed during the welding process, which causes a problem that the welding process is difficult or impossible. In addition, when utilizing laser welding, etc., a local temperature gradient can be formed in the upper plate 510 or the lower plate 520, which causes a problem that at least a part of the upper plate 510 or the lower plate 520 is bent.

However, since the cooling member 500 of the present embodiment is manufactured through a mechanical fastening method rather than a welding method, it can be manufactured so as to include two or more materials unlike the conventional one. Specifically, the mechanical fastening method of the present embodiment does not apply heat or applies heat at a temperature lower than the melting point of the material provided for the cooling member 500, so that damage to the material forming the cooling member 500 can be minimized. Therefore, since various materials can be used for the cooling member 500 of the present embodiment without being restricted by the welding temperature, the design of the cooling member 500 can be easy and more diverse.

Next, a mechanical fastening method applied to the cooling member 500 and structural features of the cooling member 500 resulting therefrom will be described with reference to the figures.

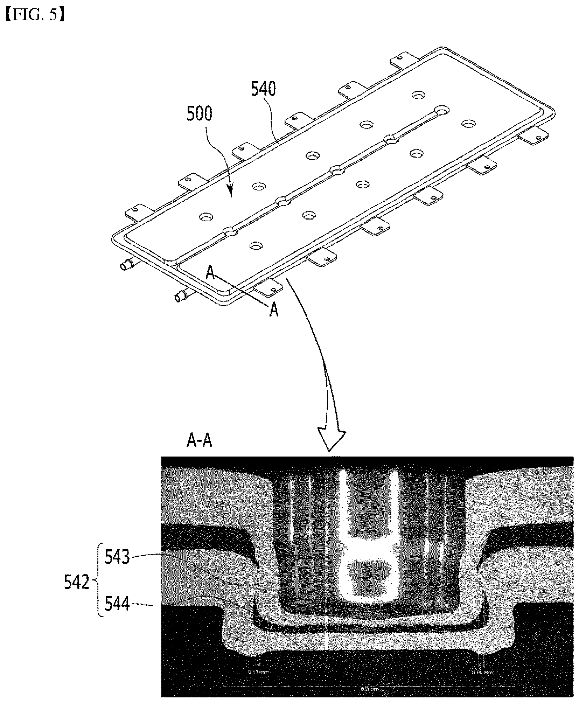

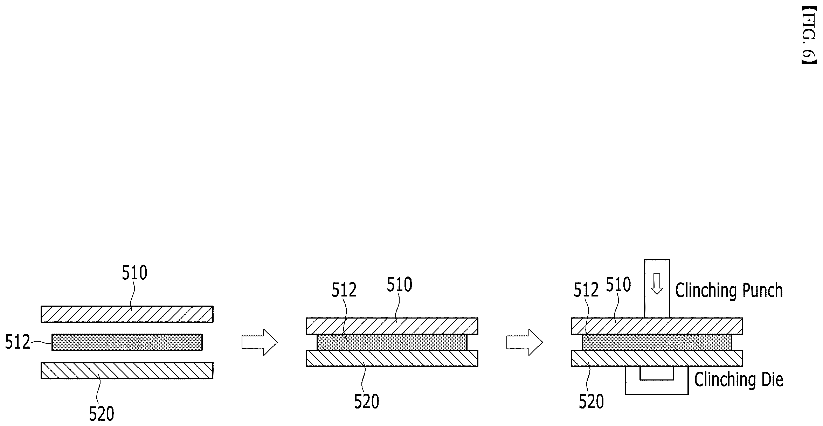

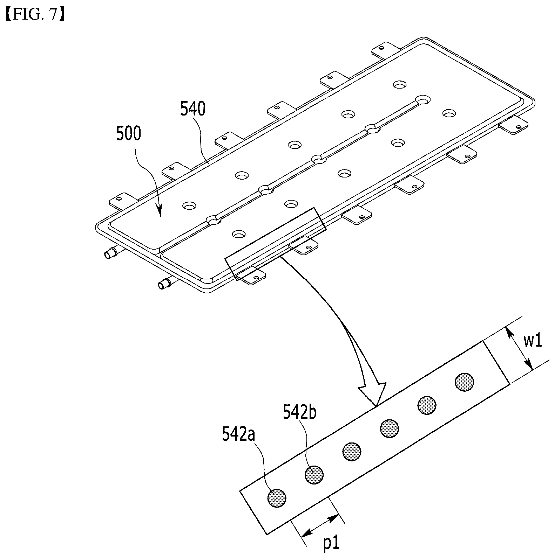

Fig. 5 is a diagram which shows a cross-sectional view taken along the line A-A of the cooling member of Fig. 2. Fig. 6 is a diagram which shows a process in which the cross-sectional structure of Fig. 5 is formed. Fig. 7 is a partially enlarged view of the cooling member of Fig. 2.

The cooling member 500 of the present embodiment may be manufactured using a clinching fastening method. Clinching is a deformation joining method of pressing one surface of two stacked plate-shaped members using a punch or the like and deforming its shape, thereby mechanically coupling the two members. Clinching may also be referred to as a penetration junction in consideration of its shape.

When the clinching fastening method is applied instead of the welding joining method during manufacture of the cooling member 500, not only excessive heat is not generated during the manufacturing process and thus, unintended deformation of the cooling member 500 can be minimized, but also the dimensional stability can be secured by reducing the dimensional difference between the previously designed dimension and the final product. Particularly, in the case of an aluminum material that has been mainly used for the cooling member 500, when a temperature of 660°C or higher, which is the melting point, is applied, it may begin to deform. However, if the above-mentioned clinching fastening method is applied, heat above the melting point is not applied to the cooling member 500 and thus, the dimensional stability of the cooling member 500 can be further improved.

In addition, when the clinching fastening method is applied during manufacture of the cooling member 500, a specific material vulnerable to temperature may not be deformed during the manufacturing process, and thus, a structure of various materials and shapes that can be formed by insert injection can be applied to the cooling member 500.

Referring to Figs. 5 to 7, the sealing part 540 of the cooling member 500 of the present embodiment may be formed by the above-mentioned clinching fastening method. The sealing part 540 may have an indentation part 542 that is indented in one direction. The indentation part 542 may be a portion that is integrally indented along the pressing direction by pressing a part of the upper plate 510 or the lower plate 520. As the indentation part 542 is formed in the sealing part 540, the upper plate 510 and the lower plate 520 can be physically coupled. Here, the pressing direction may be a direction from the upper plate 510 toward the lower plate 520, or may be a direction from the lower plate 520 toward the upper plate 510.

In a specific example, the two surfaces of the upper plate 510 may be referred to as a first surface and a second surface, and the two surfaces of the lower plate 520 may be referred to as a third surface and a fourth surface. On the basis of the first direction from the upper plate 510 toward the lower plate 520, the first surface to the fourth surface may be disposed in the order of the first surface, the second surface, the third surface and the fourth surface. The first surface of the upper plate 510 and the fourth surface of the lower plate 520 may form an outer surface of the cooling member 500, and the second surface of the upper plate 510 and the third surface of the lower plate 520 may face each other.

Here, when the first surface of the upper plate 510 is partially pressed, the first surface may be indented in the first direction so as to have a predetermined depth, and formed in a concave manner. Here, as the upper plate 510 is pressed, the lower plate 520 located under the upper plate 510 can be deformed together, and the upper plate 510 and the lower plate 520 can be integrally coupled by being physically deformed by pressure. Here, on the basis of the lower plate 520, the indentation part 542 may be described as being protruded and formed in a convex shape.

Referring to the photograph of Fig. 5, the upper plate 510 and the lower plate 520 can be indented by pressing, respectively, wherein the indentation part formed in the upper plate may be referred to as an upper indentation part 543, and the indentation part formed in the lower plate 520 may be referred to as a lower indentation part 544. When the upper plate 510 is pressed, the upper indentation part 543 may be formed, and the upper indentation part 543 is introduced into the lower plate 520 to thereby form the lower indentation part 544.

The indentation part 542 has a depth value by being indented, and the depth direction of the indentation part 542 may be perpendicular to a direction in which cooling water flows inside the cooling member 500. Here, the depth direction may be the above-mentioned pressing direction. As the indentation part 542 is formed so as to have a depth, the upper plate 510 and the lower plate 520 are firmly coupled together, and a gap between the upper plate 510 and the lower plate 520 can be prevented from being slightly widened depending on the pressure in the cooling member 500. In addition, even if the gap between the upper plate 510 and the lower plate 520 is slightly widened, the indentation part 542 can disturb the flow of cooling water, thereby preventing the cooling water from flowing out to the outside of the cooling member 500 beyond the sealing portion 540 in which the indentation part 542 is formed.

Here, the lowest point of the first surface on which the indentation part 542 is formed may be located below the region where the indentation part 542 is not formed, that is, the highest point of the third surface or the highest point of the fourth surface. When a part of the upper surface (first surface) of the upper plate 510 is deformed so as to be located lower than the upper surface (third surface) or lower surface (fourth surface) of the lower plate 520 through the clinching process, the upper plate 510 is completely introduced into the lower plate 520, so that the coupling between the upper plate 510 and the lower plate 520 can be formed more stably.

The depth of the indentation part 542 may be larger than the thickness of the upper plate 510, the lower plate 520, or a combination thereof. If the depth of the indentation part 542 is too small, it may be difficult to ensure watertightness between the upper plate 510 and the lower plate 520, and if the depth of the indentation 542 is too large, the upper plate 510 and the lower plate 520 may be excessively deformed or partially cut. For example, when the sum of the thickness of the upper plate 510 and the thickness of the lower plate 520 of the portion where the indentation part 542 is not formed is assumed as 100, the depth of the indentation part 542 may have a value of 50 or more, or 50 to 200. However, the above-mentioned value is for illustrative purposes only, and does not limit the depth of the indentation part 542 of the present disclosure. Here, the depth of the indentation part 542 may be based on the upper indentation part 543, and specifically, it may be the depth of the first surface of the upper indentation part 543 on the basis of the upper plate 510 in which the indentation part 542 is not formed.

The depth of the upper indentation part 543 may be larger than the depth of the lower indentation part 544. This may be because when it is pressed along the first direction, the upper indentation part 543 is located inside the indentation part 542 than the lower indentation part 544, and thus, the upper indentation part 543 forming the inner diameter should be deformed more than the lower indentation part 544 forming the outer diameter. In the process in which the upper indentation 543 and the lower indent 544 are formed through the pressing process, the upper plate 510 and the lower plate 520 that are pressed are decreased in thickness as the area increases. However, the upper indentation part 543 may be formed with a greater depth since it must deform to accommodate both thickness variations of the upper plate 510 and the lower plate 520. On the other hand, the first direction is for illustrating the pressing direction, and thus, when the upper plate 510 and the lower plate 520 are pressed along the second direction opposite to the first direction, the lower indentation part 544 is located inside, so that the depth of the lower indentation part 544 may be greater than the depth of the upper indentation part 543.

The indentation part 542 may have a shape in which the terminal end is slightly widened in the depth direction. The lowermost end (lowest end) of the upper indentation part 543 may have a slightly larger diameter than the other portions of the upper indentation part 543. The lowermost end (lowest end) of the lower indentation part 544 may have a slightly larger diameter than the other portions of the lower indentation part 544. Here, the maximum value of the outer diameter of the upper indentation part 543 may be larger than the minimum value of the inner diameter of the lower indentation 544, whereby a hook coupling can be formed between the upper indentation part 543 and the lower indentation part 544. Therefore, even if pressure is applied between the upper indentation part 543 and the lower indentation part 544 according to the internal pressure of the cooling member 500, the gap between the upper plate 510 and the lower plate 520 is not widened by the above-mentioned coupling. In this manner, according to the shapes of the upper indentation part 543 and the lower indentation part 544, the coupling force of the indentation part 542 can be further improved.

Meanwhile, according to an embodiment, in order to allow the sealing part 540 to be more completely formed, the punch may press the indentation part 542 again. At this time, the punch may deform the indentation part 542 so as to make the indentation part 542 compact, whereby the upper plate 510 and the lower plate 520 can be more stably coupled. Such re-pressing can crush the indentation part 542, or deform it so that the depth of the indentation part 542 is reduced. At this time, the indentation part 542 may be disposed between the punch and a second die having a larger diameter recess than the die, and when the punch presses the indentation part 542, the previously formed indentation part 542 is deformed to comply with the recess of the second die, so that at least a part of the indentation part 542 can have a larger diameter.

Here, the reason that the upper indentation part 543 and the lower indentation part 544 have a shape in which the terminal ends are slightly widened in the depth direction may be due to the re-pressing process by the second die. However, it is not necessarily the case, and the upper indentation part 543 and the lower indentation part 544 may be formed to have the above-mentioned shapes in response to the operation of the punch and die without using the second die. Since re-pressing the indentation part 542 may cause damage to the indentation part 542, the above-mentioned re-pressing process should be applied in consideration of the physical properties and size of the indentation part 542.

The outer diameter of the indentation part 542, that is, the outer diameter of the lower indentation part 544 may have a value of 5 to 11 mm, 7 to 9 mm, or 7.5 to 8.5 mm. If the diameter of the indentation part 542 is too small, it may be difficult to firmly couple the upper plate 510 and the lower plate 520 by the indentation part 542, and if the diameter of the indentation part 542 is too large, the deformation of the upper plate 510 and the lower plate 520 by the indentation part 542 may become excessive and thus, the dimensional stability of the cooling member 500 may be deteriorated. In addition, the diameter of the indentation part 542 may be designed differently depending on the distance between the indentation parts 542 , that is, the first interval described later.

At this time, since the diameter of the indentation part 542 may vary depending on the diameter of the second die, the above-mentioned outer diameter value of the lower indentation part 544 may correspond to an inner diameter value of the recess of the second die. Further, if the second die is not used and only one die is used to form the indentation part 542, the value of the outer diameter of the lower indentation part 544 described above may correspond to the value of the inner diameter of the recess of the die. That is, the outer diameter value of the lower indentation part 544 described above may correspond to the inner diameter value of the recess of the die that is finally used.

Further, in addition to the diameter of the indentation part 542, the shape of the indentation part 542 may be determined according to the shape of the punch, die, or second die used. For example, when the cross section of the punch is circular, the indentation part 542 may be formed in a tubular shape as a whole, and when the cross section of the punch is square-shaped, the indentation part 542 may be formed in a square tubular shape as a whole.

In the above description, the case where the first surface is pressed in the first direction to form the indentation part 542 has mainly been described. However, this is an example in which the indentation part 542 is formed, and the indentation part 542 may be formed by pressing the fourth surface along the second direction. Even if the indentation part 542 is formed by being pressed along the second direction, it can be fully understood through the above-described contents, and thus, a detailed description thereof will be omitted.

Meanwhile, in order to further improve the watertightness between the upper plate 510 and the lower plate 520, a sealing pad 512 may be located between the upper plate 510 and the lower plate 520. In the case of applying the conventional welding joining method, the sealing pad 512, slightly vulnerable to heat, was hardly provided during coupling of the upper plate 510 and the lower plate 520. Therefore, in the case of utilizing the welding process, in order to supplement the watertightness of the welding surface, the upper plate 510 and the lower plate 520 were mainly coupled, and then a sealant or the like was applied through an additional process. However, since the cooling member 500 according to the present embodiment is formed by a mechanical coupling method, the sealing pad 512, which is vulnerable to heat, may be coupled together during the coupling process of the upper plate 510 and the lower plate 520, thereby simplifying the manufacturing process and reducing manufacturing cost, and the like.

The sealing pad 512 can be provided between the second surface of the upper plate 510 and the third surface of the lower plate 520 facing each other, and the upper plate 510, the sealing pad 512 and the lower plate 520 may be disposed in surface contact with each other. As shown in Fig. 6, a punch is disposed on one surface of the stacked body in which the upper plate 510, the sealing pad 512, and the lower plate 520 are stacked along the first direction, and a die having a recess may be located on the other surface. Here, the recess provided in the die can be formed so as to correspond to the outer peripheral shape of the punch. When the stacked body is disposed between the punch and the die, and then the punch moves to press one surface of the stacked body, the stacked body can be deformed until it abuts against the recessed part of the die, and as the indentation part 542 is formed in the stacked body having the three layers by the above-mentioned pressure, the three layers can be firmly coupled to each other.

Through the pressing process described above, the sealing pad 512 provided as an elastic body can be compressed, thereby reducing its thickness. Specifically, on the basis of the thickness of the sealing pad 512 to which no external force is applied, the thickness of the sealing pad 512 appearing on the cross section of the cooling member 500 may be 20 to 80%. At this time, the thickness of the sealing pad 512 may be compared on the basis of the smallest value among the thicknesses of the sealing pad 512 appearing on the cross section, or on the basis of the average value of the thickness of the sealing pad 512. Meanwhile, as the sealing pad 512 is compressed, the watertightness between the upper plate 510 and the lower plate 520 can be improved. In order to ensure the watertightness described above, it may be preferable that the sealing pad 512 is compressed to a level of 40% to 60%, or about 50%. Therefore, at least a part of the sealing pads 512 appearing on the cross section of the cooling member 500 may be preferably 40% to 60%, or about 50% or less, on the basis of the thickness of the sealing pad 512 to which no external force is applied. The minimum value of the thickness of the sealing pad 512 may be preferably 40% to 60%, or about 50% or less.

Meanwhile, through the pressing process, not only the sealing pad 512 is reduced, but also the thickness of the upper plate 510 and the lower plate 520 can be partially deformed. The lowest point of the indentation part 542 may be a portion that is pressed by the punch and receives the greatest pressure, whereby the thickness value of the lowest point, that is, the deepest indented portion of the indentation part 542 may be smaller than the thickness of other portions. The portion corresponding to the punch before forming the indentation part 542 is pressed by the pressure of the punch to form a side part from the highest point to the lowest point of the indentation part 542. Therefore, as the area increases by the pressure of the punch, the overall thickness can be reduced.

Referring to Fig. 7, in the sealing part 540, the indentation part 542 may be formed in plural numbers, and the plurality of indentation parts 542 may be spaced apart from each other. Specifically, in the sealing part 540 formed with the first width w1, the indentation parts 542a and 542b adjacent to each other may be located at a first distance p1. The first distance p1 may be an important variable in securing the watertightness of the sealing part 540. Specifically, if the value of the first distance p1 is too small, the deformation due to the pressure may be excessive and thus, the dimensional stability of the cooling member 500 may be deteriorated, and if the value of the first distance p1 is too large, the rigidity of the sealing part 540 may be deteriorated. In addition, as described above, the first distance p1 may affect the size value of the indentation part 542. When the first distance p1 is designed to be large, it may be preferable that the indentation part 542 be formed to be larger than when the first distance p1 is designed to be small. Here, the first width w1 may be a width value of the sealing pad 512. Further, the first distance p1 herein may be referred to as a pitch.

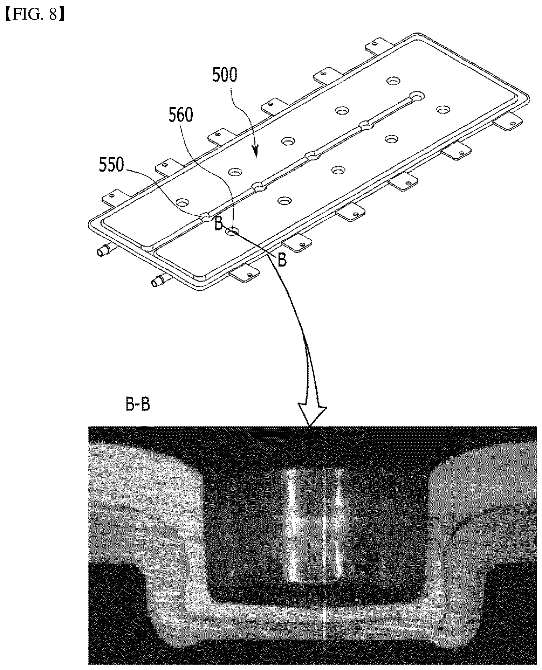

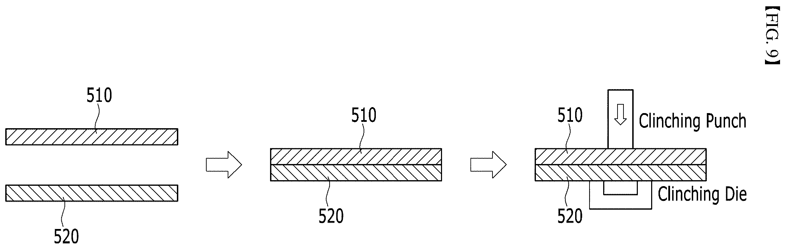

Fig. 8 is a diagram which shows a cross-sectional view taken along the line B-B of the cooling member of Fig. 2. Fig. 9 is a diagram which shows a process in which the cross-sectional structure of Fig. 8 is formed.

Referring to Figs. 8 and 9, the flow path forming groove 550 and the deformation prevention groove 560 of the cooling member 500 of the present embodiment can be formed by the clinch fastening method described above. In the manufacturing method of the cooling member 500 to which the conventional welding method is applied, a separate manufacturing process should be added to form a flow path, but a mechanical coupling method is applied to the cooling member 500 of the present embodiment, a separate manufacturing process for forming the flow path is omitted, and a flow path may be formed together during the coupling process of the upper plate 510 and the lower plate 520 described in Figs. 5 to 7. Further, within the same process, the deformation prevention structure may be formed in the cooling member 500 by forming the deformation prevention groove 560. Therefore, the cooling member 500 of the present embodiment to which the mechanical coupling method is applied may have advantages such as simplification of the manufacturing process and reduction of manufacturing cost, as compared to the case of using the conventional coupling method.

Specifically, the flow path forming groove 550 or the deformation prevention groove 560 may be formed by pressing one surface of the upper plate 510 and the lower plate 520 that are spaced apart. Since the flow path forming groove 550 or the deformation prevention groove 560 may be formed through the same method as the above-described indentation part 542 except that the sealing pad 512 is not provided, a detailed description thereof will be omitted. In addition, the flow path forming groove 550 and the deformation prevention groove 560 may also be referred to as "indentation part' in consideration of the manufacturing process and shape thereof. At this time, the indentation part 542 formed in the sealing part 540 may be referred to as a first indentation part, the flow path forming groove 550 may be referred to as a second indentation part, and the deformation preventing groove 560 may be referred to as a third indentation part.

Here, since the flow path forming groove 550 or the deformation prevention groove 560 is also formed by deforming the upper plate 510 and the lower plate 520 together, an upper flow path forming groove and a lower flow path forming groove are respectively formed in the upper plate 510 and the lower plate 520 through the flow path forming groove 550, and an upper deformation prevention groove and a lower deformation prevention groove may be formed in the upper plate 510 and the lower plate 520 through the deformation prevention groove 560, respectively. Therefore, since the contents of the depth, diameter and the like of each deformed portion can be described in detail through the above-mentioned contents, a detailed description thereof will be omitted.

However, since the indentation part 542 of Figs. 5 to 7 is formed by pressing the edges of the upper plate 510 and the lower plate 520 that contact each other, or contact each other through sealing pad 512, the upper plate 510 and the lower plate 520 are integrally coupled through the formation of the indentation part 542, but the flow path forming groove 550 and the deformation prevention groove 560 are formed by pressing the central part or the inner part of the upper plate 510 and the lower plate 520 spaced apart from each other, so that the central part or inner part of the upper plate 510 and the lower plate 520 may not be as firmly coupled as the indentation part 542 by the flow path forming groove 550 or the deformation prevention groove 560. For example, the depth of the indentation part 542 formed in the edge part of the upper plate 510 and the lower plate 520 may be larger than the depth of the flow path forming groove 550 and the deformation prevention groove 560 formed in the central part or inner part of the upper plate 510 and the lower plate 520.

However, since the flow path forming groove 550 must be stronger in coupling between the upper plate 510 and the lower plate 520 than the deformation prevention groove 560, a long groove extending in the longitudinal direction of the cooling member 500 is previously formed in the flow path forming groove 550, and the flow path forming grooves 550 is formed at intervals in the long groove, so that coupling levels can be supplemented. A long groove extending in the longitudinal direction of the cooling member 500 is previously formed in the upper plate 510 or the lower plate 520, so that the upper plate 510 and the lower plate 520 can partially contact each other. Since the flow path forming groove 550 is formed by locally pressing two plates in contact with each other, so that the flow path forming groove 550 can mechanically and firmly join the upper plate 510 and the lower plate 520, similarly to the case of the indentation part 542. Here, in the cooling member 500, the upper plate 510 or the lower plate 520, the central part or the inner part is a portion excluding the edge, and may mean a portion in which the cooling water is contained or circulated.

Next, a method of manufacturing a cooling member using a mechanical fastening method will be described.

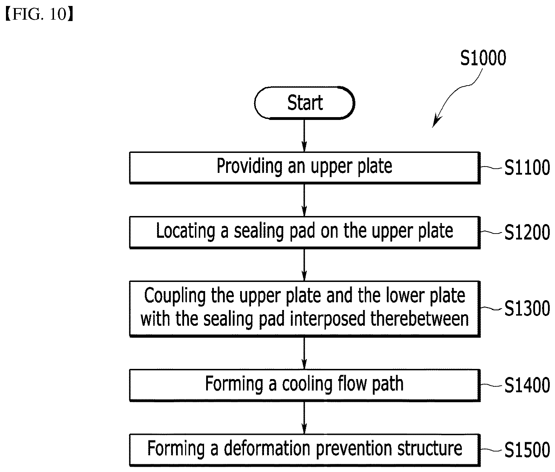

Fig. 10 is a flowchart which shows a method of manufacturing a cooling member according to another embodiment of the present disclosure.

Referring to Fig. 10, the method for manufacturing the cooling member (S1000 ) comprises:
a step of providing the upper plate 510 (S1100), a step of locating a sealing pad 512 on the upper plate 510 (S1200), a step of coupling the upper plate 510 and the lower plate 520 with the sealing pad 512 interposed therebetween (S1300), a step of forming a cooling flow path (S1400), and a step of forming a deformation prevention structure (S1500).

Each step will be described in more detail below.

The step of providing the upper plate 510 (S1100 ) may mean that the manufactured upper plate 510 is prepared for the manufacturing process of the present embodiment. Here, the upper plate 510 may have a shape in which the central portion is more indented than the edge part. The central part of the upper plate 510 may be partially formed of a groove. Further, the lower plate 520 herein may have a shape in which the central part is more recessed than the edge part. The lower plate 520 may include a first portion having a first material and a second portion having a second material. At least a part of the lower plate 520 may be formed through insert injection.

The step of locating the sealing pad 512 on the upper plate 510 (S1200) may include the step of closely adhering the sealing pad 512 to the rear surface (lower surface) of the upper plate 510 as shown in Fig. 3. Since this can be explained with reference to Fig. 3, a detailed description thereof will be omitted in the present embodiment.

Further, the step of locating the sealing pad 512 on the upper plate 510 (S1200) may include a step of stacking the upper plate 510 and the lower plate 520 in which the sealing pad 512 is located therebetween, after the step of closely adhering the sealing pad 512 to the rear surface (lower surface) of the upper plate 510. The step may be a step of seating the upper plate 510 and the sealing pad 512 onto the lower plate 520. Here, the upper plate 510 and the lower plate 520 having a similar external shape may be disposed so that the rear surface of the upper plate 510 and the upper surface of the lower plate 520 face each other, and may be disposed so that the edges where the sealing pads 512 are located in correspondence with each other.

The step (S1300) of coupling the upper plate 510 and the lower plate 520 with the sealing pad 512 interposed therebetween (S1300), the step of forming the cooling flow path (S1400), and the step of forming the deformation prevention structure (S1500) can be performed through the above-mentioned clinching process.

Specifically, the punch and die forming a pair can be used in the clinching process. The die may be formed with a recess having a shape corresponding to the outer shape of the punch. When a workpiece is located between the punch and the die, as the punch moves toward the die, a part of the workpiece can be deformed to conform to the punch and recess shape of the die. If the workpiece is composed of two or more layers, the two or more layers can be mechanically coupled through the above-mentioned modification.

The punch and the die can couple the upper plate 510 and the lower plate 520 with the sealing pad 512 interposed therebetween (S1300). The indentation part 542 is formed through the operation of the punch and the die, and thus, the sealing part 540 is formed in the upper plate 510 and the lower plate 520, whereby the upper plate 510 and the lower plate 520 can be coupled. As the indentation part 542 is formed, the edge parts of the upper plate 510 and the lower plate 520 can be coupled. As the indentation part 542 is formed, the upper plate 510, the sealing pad 512 and the lower plate 520 stacked on each other can be coupled.

The step of coupling the upper plate 510 and the lower plate 520 with the sealing pad 512 interposed therebetween (S1300) may comprise a step of preparing a stacked body in which the upper plate 510, the sealing pad 512, and the lower plate 520 are stacked in this order, a step of aligning the stacked body to a die, a step of a punch toward the stacked body, a step of locally pressing the stacked body with a punch such that the stacked body deforms according to the recess shape of the die, and a step of retracting the punch away from the stacked body.

Here, the step of coupling the upper plate 510 and the lower plate 520 with the sealing pad 512 interposed therebetween (S1300) may further comprise, after the step of retracting the punch away from the stacked body, a step of aligning the stacked body to a second die, a step of moving a punch toward the stacked body, a step of locally pressing the deformation part (indentation part) of the stacked body by a punch such that the deformation part (indentation part) of the stacked body is deformed according to the recess shape of the second die, and a step of retracting the punch away from the stacked body. At this time, in the step of aligning the stacked body to the second die, a portion of the stacked body corresponding to the second die may be the indentation 542 preformed through the above-described steps.

Meanwhile, by repeating the above steps, at least two indentation parts 542 may be formed in the sealing part 540 of the upper plate 510 and the lower plate 520, and by forming the plurality of indentation parts 542, the coupling between the upper plate 510 and the lower plate 520 can be made stronger.

The punch and the die may form a cooling flow path (S1400). As the flow path forming groove 550 is formed through the operation of the punch and the die, the flow path may be formed in the central part of the upper plate 510 and the lower plate 520. As the flow path forming groove 550 is formed so as to have a depth, a partition wall may be formed between the upper plate 510 and the lower plate 520. The partition wall may cross the inner space of the cooling member 500 so as to be perpendicular to the direction in which the cooling water flows inside the cooling member 500, and the partition wall may disturb the flow of cooling water moving in the inner space.

The step of forming a cooling flow path (S1400) may comprise a step of preparing the upper plate 510 and the lower plate 520, a step of aligning the upper plate (510) and the lower plate (520) to the die, a step of moving the punch toward one surface of the upper plate 510 and the lower plate 520, a step of locally pressing the upper plate 510 and the lower plate 520 with the punch so that the upper plate 510 and the lower plate 520 are deformed according to the recess shape of the die, and a step of retracting the punch away from the upper plate 510 and the lower plate 520.

Here, after the step of retracting the punch, the step of forming a cooling flow path (S1400) can re-press the previously formed flow path forming groove 550 by aligning the upper plate 510 and the lower plate 520 with the second die. Since specific steps thereof may be described through the contents of step (S1300) described above, a detailed description thereof will be omitted.

Further, here, a long groove extending in the longitudinal direction may be formed in the upper plate 510 or the lower plate 520 provided in the step S1400 of forming the cooling flow path. Therefore, the step of forming the cooling flow path (S1400) or the step of providing the upper plate 510 (S1100) may further comprise a step of forming a long groove extending in the longitudinal direction in the upper plate 510 or the lower plate 520. Since the long groove may be described with reference to the flow path forming groove 550, a detailed description thereof will be omitted.

Meanwhile, by repeating the above-mentioned steps, the flow path forming grooves 550 may be formed in at least two numbers. When the previously formed long groove is present, the flow path forming groove 550 may be continuously formed along the long groove.

The punch and the die can form a deformation prevention structure (S1500). As the deformation prevention groove 560 is formed through the operation of the punch and the die, a deformation prevention structure may be formed in the central part of the upper plate 510 and the lower plate 520. The deformation prevention groove 560 is formed so as to have a depth, and thus a partition wall may be formed between the upper plate 510 and the lower plate 520. The partition wall may cross the inner space of the cooling member 500 so as to be perpendicular to the direction in which the cooling water flows inside the cooling member 500, whereby even when an excessive amount of cooling water is injected into the inner space, deformation of the cooling member 500 can be slightly prevented.

The step of forming a deformation prevention structure (S1500) may comprise a step of preparing the upper plate 510 and the lower plate 520, a step of aligning the upper plate 510 and the lower plate 520 to the die, a step of moving the punch toward one surface of the upper plate 510 and the lower plate 520, a step of locally pressing the upper plate 510 and the lower plate 520 with the punch so that the upper plate 510 and the lower plate 520 are deformed according to the shape of the recess of the die, and a step of retracting the punch away from the upper plate 510 and the lower plate 520.

Here, the step of forming a deformation prevention structure (S1500) can re-press the previously formed deformation prevention groove 560 by aligning the upper plate 510 and the lower plate 520 with the second die, after the step of retracting the punch. Specific steps for this can be described through the contents of step (S1300) described above, and thus, a detailed description thereof will be omitted.

Meanwhile, by repeating the above-mentioned steps, the deformation prevention groove 560 may be formed in at least two numbers. The deformation prevention groove 560 may be located between the sealing part 540 and the flow path forming groove 550 in the width direction of the cooling member 500. The specific position of the deformation prevention groove 560 can be appropriately designed so as to comply with the flow rate and flow velocity of the cooling water without excessively disturbing the cooling water flowing through the inlet port 530.

Next, a battery pack including the above-mentioned cooling member will be described.

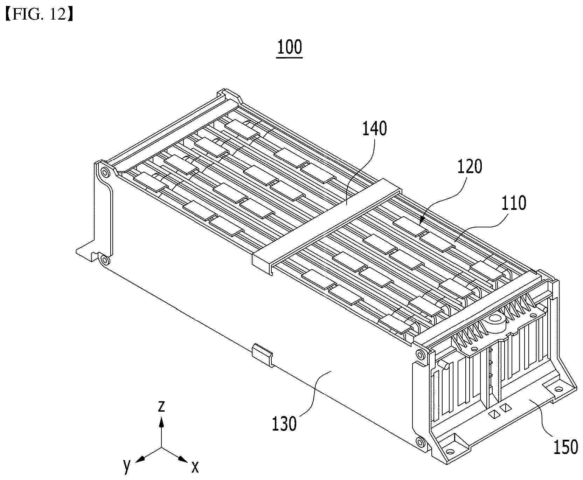

Fig. 11 is an exploded perspective view which shows a battery pack according to another embodiment of the present disclosure. Fig. 12 is a perspective view of a battery module included in the battery pack according to Fig. 11.

Referring to Fig. 11, a battery pack 1000 according to an embodiment of the present disclosure may comprise at least one battery module 100, a pack frame 200 for accommodating the battery module 100, a resin layer 300 formed on the inner surface of the pack frame 200, an end plate 400 that closes the open surface of the pack frame 200, and a cooling member 500 disposed between the pack frame 200 and the battery cell stack 120. However, the components contained in the battery pack 1000 are not limited thereto, and depending on the design, the battery pack 1000 may be provided in a state where some of the above-described components are omitted, and may be provided in a state in which other components not mentioned are added.

Referring to Figs. 11 and 12, the battery module 100 provided in the present embodiment may have a module-less structure in which the module frame is omitted.

Conventionally, conventional battery packs have a double assembly structure in which a battery cell stack and partial components connected thereto are assembled to form a battery module, and the plurality of battery modules are accommodated in the battery pack again. At this time, since the battery module includes a module frame that forms the outer surface thereof, conventional battery cells are doubly protected by the module frame of the battery module and the pack frame of the battery pack. However, such a dual assembling structure has a disadvantage that not only the manufacturing cost and manufacturing process of the battery pack are increased, but also when a defect occurs in some battery cells, reassembling property is deteriorated. In addition, when a cooling member, or the like is present outside the battery module, there is a problem that the heat transfer path between the battery cell and the cooling member is somewhat complicated.

Therefore, the battery module 100 of the present embodiment may be provided in the form of a 'cell block' in which the module frame is omitted, and the battery cell stacks 120 contained in the cell block can be directly coupled to the pack frame 200 of the battery pack 1000. Thereby, the structure of the battery pack 1000 can be simplified, advantages in terms of manufacturing cost and manufacturing process can be obtained, and the weight reduction of the battery pack can be achieved.

In the following, the battery module 100 without a module frame may be referred to as a 'cell block' to distinguish it from a battery module having a module frame. However, the battery module 100 is a generic term having the battery cell stack 120 segmented into a predetermined unit for modularization regardless of the presence or absence of the module frame, and the battery module 100 should be construed as including both a typical battery module and a cell block having a module frame.

Referring to Fig. 12, the battery module 100 of the present embodiment may comprise a battery cell stack 120 in which a plurality of battery cells 110 are stacked in one direction, side surface plates 130 located at both ends in the stacking direction of the battery cell stack 120, a holding strap 140 that wraps around the side surface plate 130 and the battery cell stack 120 to fix its shape and a busbar frame 150 for covering the front and rear surfaces of the battery cell stack 120.

Meanwhile, Fig. 12 shows the battery module 100 provided in the form of a cell block, but the contents of these figures do not exclude the case of applying the battery module 100 of the sealed structure having the module frame to the battery pack 1000 of the present embodiment.

The battery cell 110 may include an electrode assembly, a cell case, and an electrode lead protruding from the electrode assembly, respectively. The battery cells 110 may be provided in a pouch shape or a prismatic shape in which the number of stacked cells per unit area can be maximized. For example, the battery cell 110 provided in a pouch type can be manufactured by accommodating an electrode assembly including a positive electrode, a negative electrode, and a separator in a cell case made of a laminated sheet and then heat-sealing a sealing part of the cell case. Meanwhile, Figs. 11 and 12 show that the positive electrode lead and the negative electrode lead of the battery cell 110 protrude in opposite directions to each other, but it is not necessarily the case, and the electrode leads of the battery cell 110 can be protruded in the same direction.

The battery cell stack 120 may be one in which a plurality of electrically connected battery cells 110 are stacked in one direction. A direction in which the plurality of battery cells 110 are stacked (hereinafter referred to as a 'stacking direction') may be a y-axis direction (or a -y-axis direction) as shown in Figs. 11 and 12, and in the following, the expression 'axial direction' may be interpreted as including all +/- directions).

Meanwhile, as the battery cell 110 is disposed along one direction, the electrode leads of the battery cell 110 may be located on one surface or one surface and the other surface facing the one surface of the battery cell stack 120. In this manner, the surface on which the electrode leads are located in the battery cell stack 120 may be referred to as the front surface or the rear surface of the battery cell stack 120, and in Figs. 11 and 12, the front surface and the rear surface of the battery cell stack 120 are shown as two surfaces facing each other on the x-axis.

Further, in the battery cell stack 120, the surface on which the outermost battery cell 110 is located may be referred to as a side surface of the battery cell stack 120, and in Figs. 11 and 12, the side surface of the battery cell stack 120 is shown as two surfaces facing each other on the y-axis.

The side surface plate 130 may be provided to maintain the overall shape of the battery cell stack 120. The side surface plate 130 is a plate-shaped member, and can supplement the stiffness of the cell block instead of the module frame. The side surface plate 130 may be disposed at both ends in the stacking direction of the battery cell stack 120, and may be in contact with the outermost battery cells 110 on both sides of the battery cell stack 120.

The side surface plate 130 may be manufactured from various materials, and may be provided by various manufacturing methods. In one example, the side surface plate 130 may be made of a plastic material manufactured by injection molding. In another example, the side surface plate 130 may be made of a leaf spring material. In another example, the side surface plate 130 may be made of a material having elasticity so that its shape may be partially deformed in response to a volume change of the battery cell stack 120 due to swelling.

The holding strap 140 can be for fixing the position and shape of the side surface plates 130 at both ends of the battery cell stack 120. The holding strap 140 may be a member having a length and a width. Specifically, the battery cell stack 120 may be located between the two side surface plates 130 in contact with the outermost battery cell 110, and the holding strap 140 may cross the battery cell stack 120 to connect the two side surface plates 130. Thereby, the holding strap 140 can prevent the distance between the two side surface plates 130 from increasing beyond a certain range, whereby the overall shape of the cell block can be maintained within a certain range.

The holding strap 140 may have hooks at both terminal ends in the longitudinal direction for stable coupling with the side plate 130. The hook may be formed by bending both terminal ends of the holding strap 140 in the longitudinal direction. Meanwhile, the side surface plate 130 may have a hook groove formed at a position corresponding to the hook, and the holding strap 140 and the side surface plate 130 can be stably coupled through the coupling of the hook and the hook groove.

The holding strap 140 may be provided with various materials or through various manufacturing methods. In one example, the holding strap 140 may be made form a material having elasticity, through which the volume change of the battery cell stack 120 due to swelling can be allowed within a certain range.

Meanwhile, the holding strap 140 is for fixing the relative position between the side surface plate 130 and the battery cell stack 120, and if the purpose of the 'fixing member' is achieved, it may be provided in a shape other than those shown. For example, the fixing member may be provided in the form of a long bolt that can cross between the two side surface plates 130 , that is, a long bolt. The side surface plate 130 may be provided with a groove into which the long bolt can be inserted, and the long bolt may be simultaneously coupled with the two side surface plates 130 through the groove to thereby fix the relative positions of the two side surface plates 130. The long bolt may be provided at an edge of the side plate 130, preferably at a position close to the vertex of the side surface plate 130. Depending on the design, it is possible to replace the holding strap 140 with the above-mentioned long bolt, but both the holding strap 140 and the long bolt can also be provided in the cell block.

The busbar frame 150 can be for covering one surface of the battery cell stack 120, and at the same time, guiding the connection between the battery cell stack 120 and an external device by being located on one surface of the battery cell stack 120. The busbar frame 150 may be located on the front surface or rear surface of the battery cell stack 120. Two busbar frames 150 may be provided so as to be located on the front surface and the rear surface of the battery cell stack 120. A busbar may be mounted on the busbar frame 150, through which the electrode lead of the battery cell stack 120 is connected to the busbar, so that the battery cell stack 120 may be electrically connected to an external device.

The busbar frame 150 may include an electrically insulating material. The busbar frame 150 can restrict contact of the busbar with other portions of the battery cells 110 other than the portion joined to the electrode lead, and can prevent an electrical short circuit from occurring.

The pack frame 200 can be for protecting the battery module 100 and the electrical equipment connected thereto from external physical impact. The pack frame 200 may accommodate the battery module 100 and electrical equipment connected thereto in the inner space of the pack frame 200. Here, the pack frame 200 includes an inner surface and an outer surface, and the inner space of the pack frame 200 may be defined by the inner surface.

The battery modules 100 accommodated in the pack frame 200 can be formed in plural numbers. The plurality of battery modules 100 may be referred to as a 'module assembly'. The module assemblies can be arranged in rows and columns within the pack frame 200. Here, the 'row' may mean a set of battery modules 100 arranged in one direction, and the 'column' may mean a set of battery modules 100 arranged in a direction perpendicular to the one direction. For example, the battery modules 100 may be arranged along the stacking direction of the battery cell stack as shown in Fig. 1 to form one row or column, thereby forming a module assembly.

The pack frame 200 may be provided in an open hollow shape along one direction. For example, as shown in Fig. 1, a plurality of battery modules 100 are consecutively located along the stacking direction of the battery cells 110, and the pack frame 200 may have an open hollow shape along the above-mentioned stacking direction.

The pack frame 200 may have various structures. In one example, as shown in Fig. 11, the pack frame 200 may include a lower frame 210 and an upper frame 220. Here, the lower frame 210 may be provided in a plate shape, and the upper frame 220 may be provided in a U-shape. At least one battery module 100 may be arranged in the plate-shaped lower frame 210, and a U-shaped upper frame 220 may be provided so as to wrap the upper surface of the module assembly and two surfaces on the x-axis.

The pack frame 200 may include a portion having high thermal conductivity in order to rapidly dissipate heat generated in the inner space to the outside. For example, at least a part of the pack frame 200 may be made from a metal having high thermal conductivity, and examples thereof may be aluminum, gold, silver, copper, platinum, or an alloy containing these, and the like. **In** addition, the pack frame 200 may have a partially electrical insulating property, and an insulating film may be provided at a position where insulation is required, or an insulating coating can be applied. A portion of the pack frame 200 to which an insulating film or insulating coating is applied may be referred to as an insulating part.

A resin layer 300 may be provided between the battery module 100 and the inner surface of the pack frame 200. The resin layer 300 may be provided between the bottom surface of the battery module 100 and the lower frame 210. The resin layer 300 can be provided between the upper surface of the battery module 100 and the upper frame 220. Here, specifically, the resin layer 300 may be provided between the cooling member 500 and the upper frame 220, which will be described later.

The resin layer 300 may be formed by injecting a resin between one of the inner surfaces of the battery cell stack 120 and the pack frame 200. However, it is not necessarily the case, and the resin layer 300 may be a member provided in a plate shape.

The resin layer 300 can be made from various materials, and the function of the resin layer 300 can vary depending on the material. For example, the resin layer 300 may be formed from an insulating material, and electron transfer between the battery module 100 and the pack frame 200 can be prevented through the insulating resin layer 300. In another example, the resin layer 300 may be formed of a thermally conductive material. The resin layer 300 made of a thermally conductive material transfers heat generated in the battery cell 110 to the pack frame 200, so that heat can be released/transferred to the outside. In another example, the resin layer 300 may include an adhesive material, through which the battery module 100 and the pack frame 200 can be fixed to each other. In a specific example, the resin layer 300 may be provided so as to include at least one of a silicone-based material, a urethane-based material, and an acrylic-based material.

The end plate 400 can be for protecting the battery module 100 and the electrical components connected thereto from external physical impact by sealing the open surface of the pack frame 200. Each edge of the end plate 400 can be coupled to a corresponding edge of the pack frame 200 by a method such as welding. The end plates 400 can be provided in two numbers so as to seal two open surfaces of the pack frame 200, and may be made of a metal material having a predetermined strength.

An opening 410 may be formed in the end plate 400 to expose the inlet/outlet port 530 of the cooling member 500, which will be described later, and a connector 420 for low voltage (LV) connection or high voltage (HV) connection with an external device can be mounted.

The cooling member 500 may be for cooling the inside of the battery pack 1000 by dissipating heat generated from the battery cells 110. For the description of the cooling member 500, refer to the contents described above.

Meanwhile, in Fig. 11, it is shown that the cooling member 500 is provided outside the battery module 100, but it is not necessarily the case, and the cooling member 500 can also be arranged inside the battery module 100. At this time, the battery module 100 may have a closed structure or an opened structure such as a cell block.

Meanwhile, although not specifically mentioned above, the battery pack according to an embodiment of the present disclosure may include a battery management system (BMS) and/or a cooling device that manage the temperature or voltage of the battery.

The battery pack according to an embodiment of the present disclosure can be applied to various devices. The device to which the battery pack is applied may be a vehicle means such as an electric bicycle, an electric vehicle, or a hybrid vehicle. However, but the above-mentioned device is not limited thereto, and the battery pack according to the present embodiment can be used for various devices in addition to the above illustrations, which also falls within the scope of the present disclosure.

Although preferred embodiments of the present disclosure have been described in detail above, the scope of the present disclosure is not limited thereto, and various modifications and improvements made by those skilled in the art using the basic concepts of the present disclosure, which are defined in the appended claims, also falls within the scope of the present disclosure.

### [Description of Reference Numerals]

100: battery module
110: battery cell
120: battery cell stack
130: side surface plate
140: holding strap
150: busbar frame
200: pack frame
300: resin layer
400: end plate
500: cooling member
510: upper plate
520: lower plate
530: inlet/outlet port
540: sealing part
542: indentation part
550: flow path forming groove
560: deformation prevention groove

## Claims

1. A cooling member (500) for cooling a battery cell (110), comprising:
an upper plate (510), a lower plate (520), and an in-out port (530) for injecting cooling water into an inner space between the upper plate (510) and the lower plate (520),
wherein the cooling member (500) includes an indentation part (542) formed by introducing the upper plate (510) into the lower plate (520) or introducing the lower plate (520) into the upper plate (510),
wherein a first indentation part is formed in an edge part of the cooling member (500),
wherein a second indentation part is formed in a central part of the cooling member (500), and
wherein the indentation part (542) includes a third indentation part (560) located between the first indentation part and the second indentation part in a width direction of the cooling member (500),
the second indentation part being formed in an elongated groove (550) formed along a longitudinal direction of the cooling member (500), except for a predetermined section, whereby a flow of the cooling water can be formed in a U-shape, **characterized in that** a sealing pad (512) is located between the upper plate (510) and the lower plate (520) that form the first indentation part,
wherein the lower plate (520) comprises a first portion formed from a first material and a second portion formed from a second material different from the first material, the second material being more vulnerable to heat or pressure than the first material.

2. The cooling member (500) according to claim 1, wherein:
the indentation part (542) has a depth, and a direction in which the depth extends is perpendicular to a direction of flow of cooling water in the cooling member (500).

3. The cooling member (500) according to claim 1, wherein:
the indentation part (542) comprises an upper indentation part (543) in which the upper plate (510) is deformed and a lower indentation part (544) in which the lower plate (520) is deformed, and
a lowest point of an upper surface of the upper indentation part (543) is located below an upper surface of the lower plate (520) in which the indentation part (542) is not formed.

4. The cooling member (500) according to claim 3, wherein:
the lowest point of the upper surface of the upper indentation part (543) is located below a lower surface of the lower plate (520) in which the indentation part (542) is not formed.

5. The cooling member (500) according to claim 1, wherein:
the indentation part (542) comprises an upper indentation part (543) in which the upper plate (510) is deformed and a lower indentation part (544) in which the lower plate (520 is deformed, and
a maximum value of an outer diameter of the upper indentation part (543) is larger than a minimum value of an inner diameter of the lower indentation part (544).

6. The cooling member (500) according to claim 1, wherein:
the first material is aluminum, and
the second material is a thermoplastic polymer resin having a melting point of 200°C or less.

7. A method for manufacturing a cooling member (500), the method comprising the steps of:
locating a sealing pad (512) on an edge of an upper plate (510),
stacking the upper plate (510) on which the sealing pad (512) is located and a lower plate (520),
coupling edges of the upper plate (510) and the lower plate (520) with the sealing pad (512) therebetween by forming a first indentation part, and
forming a cooling flow path in a central part of the upper plate (510) and the lower plate (520) by forming a second indentation part
**characterized in that** the method also comprises:
forming a third indentation part (560) located between the first indentation part and the second indentation part in a width direction of the cooling member (500),
the second indentation part being formed in an elongated groove (550) formed along a longitudinal direction of the cooling member (500), except for a predetermined section, whereby a flow of the cooling water can be formed in a U-shape,
wherein the lower plate (520) comprises a first portion formed from a first material and a second portion formed from a second material different from the first material, the second material being more vulnerable to pressure than the first material.

8. The method for manufacturing a cooling member (500) according to claim 7, further comprising:
forming a deformation prevention structure (560) in a central part of the upper plate (510) and the lower plate (520) by forming a third indentation part.

9. The method for manufacturing a cooling member (500) according to claim 7, wherein:
the step of coupling the edges of the upper plate (510) and the lower plate (520) comprises,
preparing a stacked body in which the upper plate (510), the sealing pad (512) and the lower plate (520) are stacked in order,
aligning the stacked body to a die,
moving a punch toward the stacked body,
locally pressing the stacked body with the punch so that the stacked body deforms according to the recess shape of the die, and
retracting the punch away from the stacked body.

10. The method for manufacturing a cooling member (500) according to claim 9, comprising:
aligning the stack to the second die, after retracting the punch away from the stacked body.

11. A battery module (100) comprising the cooling member (500) according to claim 1.

12. A battery pack comprising the cooling member (500) according to claim 1.

13. The battery pack according to claim 12, wherein:
the battery pack includes a battery module having an open structure.

## Patentansprüche

1. Kühlelement (500) zum Kühlen einer Batteriezelle (110), umfassend:
eine obere Platte (510), eine untere Platte (520) und einen Ein-Aus-Anschluss (530) zum Eingeben von Kühlwasser in einen Innenraum zwischen der oberen Platte (510) und der unteren Platte (520),
wobei das Kühlelement (500) einen Vertiefungsteil (542) umfasst, welcher durch Einführen der oberen Platte (510) in die untere Platte (520) oder Einführen der unteren Platte (520) in die obere Platte (510) gebildet ist,
wobei ein erster Vertiefungsteil in einem Randteil des Kühlelements (500) gebildet ist,
wobei ein zweiter Vertiefungsteil in einem zentralen Teil des Kühlelements (500) gebildet ist, und
wobei der Vertiefungsteil (542) einen dritten Vertiefungsteil (560) umfasst, welcher zwischen dem ersten Vertiefungsteil und dem zweiten Vertiefungsteil in einer Breitenrichtung des Kühlelements (500) angeordnet ist,
der zweite Vertiefungsteil in einer länglichen Nut (550) gebildet ist, welche entlang einer longitudinalen Richtung des Kühlelements (500) gebildet ist, ausgenommen einen vorbestimmten Bereich, wodurch ein Strömen des Kühlwassers in einer U-Form gebildet werden kann,
**dadurch gekennzeichnet, dass** ein Dichtungskissen (512) zwischen der oberen Platte (510) und der unteren Platte (520) angeordnet ist, welche den ersten Vertiefungsteil bilden,
wobei die untere Platte (520) einen ersten Abschnitt, welcher aus einem ersten Material gebildet ist, und einen zweiten Abschnitt umfasst, welcher aus einem zweiten Material gebildet ist, welches verschieden von dem ersten Material ist, wobei das zweite Material empfindlicher gegenüber Wärme oder Druck ist als das erste Material.

2. Kühlelement (500) nach Anspruch 1, wobei:
der Vertiefungsteil (542) eine Tiefe aufweist, und eine Richtung, in welcher sich die Tiefe erstreckt senkrecht zu einer Strömungsrichtung von Kühlwasser in dem Kühlelement (500) ist.

3. Kühlelement (500) nach Anspruch 1, wobei:
der Vertiefungsteil (542) einen oberen Vertiefungsteil (543), in welchem die obere Platte (510) verformt ist, und einen unteren Vertiefungsteil (544) umfasst, in welchem die untere Platte (520) verformt ist, und
ein niedrigster Punkt einer oberen Fläche des oberen Vertiefungsteils (543) unterhalb einer oberen Fläche der unteren Platte (520) angeordnet ist, in welcher der Vertiefungsteil (542) nicht gebildet ist.

4. Kühlelement (500) nach Anspruch 3, wobei:
der tiefste Punkt der oberen Fläche des oberen Vertiefungsteils (543) unterhalb einer unteren Fläche der unteren Platte (520) angeordnet ist, in welcher der Vertiefungsteil (542) nicht gebildet ist.

5. Kühlelement (500) nach Anspruch 1, wobei:
der Vertiefungsteil (542) einen oberen Vertiefungsteil (543), in welchem die obere Platte (510) verformt ist, und einen unteren Vertiefungsteil (544) umfasst, in welchem die untere Platte (520) verformt ist, und
ein maximaler Wert eines äußeren Durchmessers des oberen Vertiefungsteils (543) größer als ein minimaler Wert eines inneren Durchmessers des unteren Vertiefungsteils (544) ist.

6. Kühlelement (500) nach Anspruch 1, wobei:
das erste Material Aluminium ist, und
das zweite Material ein thermoplastisches Polymerharz ist, welches einen Schmelzpunkt von 200°C oder weniger aufweist.

7. Verfahren zum Herstellen eines Kühlelements (500), wobei das Verfahren die Schritte umfasst:
Anordnen eines Dichtungskissens (512) an einem Rand einer oberen Platte (510),
Stapeln der oberen Platte (510), an welcher das Dichtungskissen (512) angeordnet ist, und einer unteren Platte (520),
Koppeln von Rändern der oberen Platte (510) und der unteren Platte (520) mit dem Dichtungskissen (512) dazwischen, durch Bilden eines ersten Vertiefungsteils, und
Bilden eines Kühlung-Strömungspfads in einem zentralen Teil der oberen Platte (510) und der unteren Platte (520) durch Bilden eines zweiten Vertiefungsteils,
**dadurch gekennzeichnet, dass** das Verfahren ebenfalls umfasst:
Bilden eines dritten Vertiefungsteils (560), welcher zwischen dem ersten Vertiefungsteil und dem zweiten Vertiefungsteil in einer Breitenrichtung des Kühlelements (500) angeordnet ist,
wobei der zweite Vertiefungsteil in einer länglichen Nut (550) gebildet ist, welche entlang einer longitudinalen Richtung des Kühlelements (500) gebildet ist, ausgenommen ein vorbestimmter Bereich, wodurch ein Strömen des Kühlwassers in einer U-Form gebildet werden kann,
wobei die untere Platte (520) einen ersten Abschnitt, welcher aus einem ersten Material gebildet ist, und einen zweiten Abschnitt umfasst, welcher aus einem zweiten Material gebildet ist, welches verschieden von dem ersten Material ist, wobei das zweite Material empfindlicher gegenüber Druck ist als das erste Material.

8. Verfahren zum Herstellen eines Kühlelements (500) nach Anspruch 7, ferner umfassend:
Bilden einer Verformung-Verhinderungsstruktur (560) in einem zentralen Teil der oberen Platte (510) und der unteren Platte (520) durch Bilden eines dritten Vertiefungsteils.

9. Verfahren zum Herstellen eines Kühlelements (500) nach Anspruch 7, wobei:
der Schritt des Koppelns der Ränder der oberen Platte (510) und der unteren Platte (520) umfasst,
Vorbereiten eines gestapelten Körpers, in welchem die obere Platte (510), das Dichtungskissen (512) und die untere Platte (520) in Reihenfolge gestapelt sind,
Ausrichten des gestapelten Körpers auf eine Form,
Bewegen einer Stanze in Richtung des gestapelten Körpers,
lokales Pressen des gestapelten Körpers mit der Stanze, so dass sich der gestapelte Körper gemäß der Ausnehmungsform der Form verformt, und
Zurückziehen der Stanze weg von dem gestapelten Körper.

10. Verfahren zum Herstellen eines Kühlelements (500) nach Anspruch 9, umfassend:
Ausrichten des Stapels auf die zweite Form nach dem Zurückziehen der Stanze weg von dem gestapelten Körper.

11. Batteriemodul (100), umfassend das Kühlelement (500) nach Anspruch 1.

12. Batteriepack, umfassend das Kühlelement (500) nach Anspruch 1.

13. Batteriepack nach Anspruch 12, wobei:
der Batteriepack ein Batteriemodul umfasst, welches eine offene Struktur aufweist.

## Revendications

1. Élément de refroidissement (500) pour refroidir une cellule de batterie (110), comprenant :
une plaque supérieure (510), une plaque inférieure (520) et un orifice d'entrée-sortie (530) pour injecter de l'eau de refroidissement dans un espace interne entre la plaque supérieure (510) et la plaque inférieure (520),
dans lequel l'élément de refroidissement (500) comporte une partie d'indentation (542) formée par introduction de la plaque supérieure (510) dans la plaque inférieure (520) ou par introduction de la plaque inférieure (520) dans la plaque supérieure (510),
dans lequel une première partie d'indentation est formée dans une partie de bord de l'élément de refroidissement (500),
dans lequel une deuxième partie d'indentation est formée dans une partie centrale de l'élément de refroidissement (500), et
dans lequel la partie d'indentation (542) comporte une troisième partie d'indentation (560) située entre la première partie d'indentation et la deuxième partie d'indentation dans une direction de largeur de l'élément de refroidissement (500),
la deuxième partie d'indentation étant formée selon une rainure allongée (550) formée le long d'une direction longitudinale de l'élément de refroidissement (500), à l'exception d'une section prédéterminée, de sorte qu'un écoulement de l'eau de refroidissement peut être formé en forme de U, **caractérisé en ce qu'**un tampon d'étanchéité (512) est situé entre la plaque supérieure (510) et la plaque inférieure (520) qui forment la première partie d'indentation,
dans lequel la plaque inférieure (520) comprend une première partie formée à partir d'un premier matériau et une deuxième partie formée à partir d'un deuxième matériau différent du premier matériau, le deuxième matériau étant plus vulnérable à la chaleur ou à la pression que le premier matériau.

2. Élément de refroidissement (500) selon la revendication 1, dans lequel :
la partie d'indentation (542) a une profondeur, et une direction dans laquelle la profondeur s'étend est perpendiculaire à une direction d'écoulement de l'eau de refroidissement dans l'élément de refroidissement (500).

3. Élément de refroidissement (500) selon la revendication 1, dans lequel :
la partie d'indentation (542) comprend une partie d'indentation supérieure (543) dans laquelle la plaque supérieure (510) est déformée et une partie d'indentation inférieure (544) dans laquelle la plaque inférieure (520) est déformée, et
un point le plus bas d'une surface supérieure de la partie d'indentation supérieure (543) est situé sous une surface supérieure de la plaque inférieure (520) dans laquelle la partie d'indentation (542) n'est pas formée.

4. Élément de refroidissement (500) selon la revendication 3, dans lequel :
le point le plus bas de la surface supérieure de la partie d'indentation supérieure (543) est situé sous une surface inférieure de la plaque inférieure (520) dans laquelle la partie d'indentation (542) n'est pas formée.

5. Élément de refroidissement (500) selon la revendication 1, dans lequel :
la partie d'indentation (542) comprend une partie d'indentation supérieure (543) dans laquelle la plaque supérieure (510) est déformée et une partie d'indentation inférieure (544) dans laquelle la plaque inférieure (520) est déformée, et
une valeur maximale d'un diamètre extérieur de la partie d'indentation supérieure (543) est supérieure à une valeur minimale d'un diamètre intérieur de la partie d'indentation inférieure (544).

6. Élément de refroidissement (500) selon la revendication 1, dans lequel :
le premier matériau est de l'aluminium, et
le deuxième matériau est une résine polymère thermoplastique présentant un point de fusion de 200 °C ou moins.

7. Procédé de fabrication d'un élément de refroidissement (500), le procédé comprenant les étapes suivantes :
le positionnement d'un tampon d'étanchéité (512) sur un bord d'une plaque supérieure (510),
l'empilement de la plaque supérieure (510) sur laquelle se trouve le tampon d'étanchéité (512) et d'une plaque inférieure (520),
l'accouplement de bords de la plaque supérieure (510) et de la plaque inférieure (520) avec le tampon d'étanchéité (512) entre elles par formation d'une première partie d'indentation, et
la formation d'un trajet d'écoulement de refroidissement dans une partie centrale de la plaque supérieure (510) et de la plaque inférieure (520) par formation d'une deuxième partie d'indentation
**caractérisé en ce que** le procédé comprend également :
la formation d'une troisième partie d'indentation (560) située entre la première partie d'indentation et la deuxième partie d'indentation dans une direction de largeur de l'élément de refroidissement (500),
la deuxième partie d'indentation étant formée selon une rainure allongée (550) formée le long d'une direction longitudinale de l'élément de refroidissement (500), à l'exception d'une section prédéterminée, de sorte qu'un écoulement de l'eau de refroidissement peut être formé en forme de U,
dans lequel la plaque inférieure (520) comprend une première partie formée à partir d'un premier matériau et une deuxième partie formée à partir d'un deuxième matériau différent du premier matériau, le deuxième matériau étant plus vulnérable à la pression que le premier matériau.

8. Procédé de fabrication d'un élément de refroidissement (500) selon la revendication 7, comprenant en outre :
la formation d'une structure de prévention de déformation (560) dans une partie centrale de la plaque supérieure (510) et de la plaque inférieure (520) par formation d'une troisième partie d'indentation.

9. Procédé de fabrication d'un élément de refroidissement (500) selon la revendication 7, dans lequel :
l'étape d'accouplement des bords de la plaque supérieure (510) et de la plaque inférieure (520) comprend,
la préparation d'un corps empilé dans lequel la plaque supérieure (510), le tampon d'étanchéité (512) et la plaque inférieure (520) sont empilés dans l'ordre,
l'alignement du corps empilé sur une filière,
le déplacement d'un poinçon vers le corps empilé,
le fait de presser localement le corps empilé avec le poinçon de sorte que le corps empilé se déforme selon la forme d'évidement de la filière, et
le retrait du poinçon du corps empilé.

10. Procédé de fabrication d'un élément de refroidissement (500) selon la revendication 9, comprenant :
l'alignement de l'empilement sur la deuxième filière, après le retrait du poinçon du corps empilé.

11. Module de batterie (100), comprenant l'élément de refroidissement (500) selon la revendication 1.

12. Bloc-batterie comprenant l'élément de refroidissement (500) selon la revendication 1.

13. Bloc-batterie selon la revendication 12, dans lequel :
le bloc-batterie comporte un module de batterie présentant une structure ouverte.
